# EUROPEAN PATENT APPLICATION

(11) **EP 4 776 154 A1**
(43) Date of publication of application: **15.07.2026**
(21) Application number: 24861406.7
(22) Date of filing: 05.09.2024
(51) Int. Cl.: G06F 16/35, G06F 40/20, G06F 40/30, G06F 40/279, G06N 3/08, G06N 20/00, G06N 5/02

(54) **METHOD FOR EXTRACTING ENTITIES AND RELATIONSHIPS FROM A CORPUS TO POPULATE A KNOWLEDGE GRAPH**

(30) Priority: 05.09.2023 BR 102023018028
(71) Applicant: Petróleo Brasileiro S.A. - Petrobras, 20031-912 Rio de Janeiro - RJ (BR); Pontifícia Universidade Católica Do Rio de Janeiro, 22451-900 Rio de Janeiro RJ (BR)
(72) Inventor: CORREA CORDEIRO, Fabio, 20031-170 Rio de Janeiro (BR); TESSAROLLO, Alexandre, 20031-170 Rio de Janeiro (BR); DA SILVA MAGALHAES GOMES, Diogo, 20031-170 Rio de Janeiro (BR); ALVES DE SOUZA, Elvis, 21050-810 Rio de Janeiro (BR); ANDRELLO RUBO, Rafael, 20031-170 Rio de Janeiro (BR); ALCANTARA BATISTA, Vitor, 20031-170 Rio de Janeiro (BR); FORERO MENDOZA, Leonardo Alfredo, 20550-013 Rio de Janeiro (BR); SAYÃO CRYSTALLINO DA ROCHA, Renato, 22451-900 Rio de Janeiro (BR); SOUSA DE HOLANDA CAVALCANTI, Tatiana, 22030-001 Rio de Janeiro (BR); DE FREITAS, Maria Cláudia, 22260-210 Rio de Janeiro (BR); MUNOZ VILLALLOBOS, Cristian Enrique, 22541-041 Rio de Janeiro (BR); MONTEIRO MARTINHO, Lucas, 22461-000 Rio de Janeiro (BR); AZEVEDO ALEXANDRE, Antonio Marcelo, 20031-170 Rio de Janeiro (BR); SILVA TAVARES, Carlos Guilherme, 20031-170 Rio de Janeiro (BR); CONCEIÇÃO SANTOS BATISTA, Evelyn, 22250-040 Rio de Janeiro (BR); DE ABREU E LIMA CORREIA, Sofia, 20031-170 Rio de Janeiro (BR); FERREIRA DA SILVA, Patricia, 20031-170 Rio de Janeiro (BR); DE CASTRO RODRIGUES, Max, 20031-170 Rio de Janeiro (BR)
(74) Representative: Clarke, Modet y Cía., S.L.
(86) International application number: PCT/BR2024/050399
(87) International publication number: WO 2025/050194

(57) **Abstract**

The present invention discloses a method for extracting entities and relations from technical documents in a mostly automated way that achieves a more complete and accurate result in a reduced time frame. Several deep learning models are trained using a corpus of the domain of interest annotated by experts and linguists. A graph vector model is also trained. The manual annotations and revisions are the minimum necessary to obtain automated models capable of automatically extracting the entities and relations from a corpus. Once trained, the models can be used in any corpus within the same domain of knowledge.

## Description

### FIELD OF THE INVENTION

The present invention relates to methods for populating a knowledge graph with information automatically extracted from a set of technical documents. More specifically, the present invention discloses methods of chaining artificial intelligence supervised training techniques to extract the largest and best possible set of entities and labels from a corpus.

### BACKGROUNDS OF THE INVENTION

Extracting information from large data repositories is the foundation behind many recent technological developments and has become an important research topic. Many companies have been interested in collecting strategic information from their document repositories. This is particularly relevant to the oil and gas industry, due to its large repositories containing geoscientific reports from several decades of production.

Developing knowledge representations or ontologies is quite costly, so much so that this problem is known as the "acquisition bottleneck." The most common method for building ontologies involves bringing together domain experts and ontology engineers in a series of interview sessions so that they can describe the concepts, relations, and attributes that should make up the knowledge graph.

A desirable approach to overcome the "acquisition bottleneck" is to automatically collect the necessary information directly from data sources, using computational algorithms developed for this purpose. This type of procedure can reduce the need for expert intervention and the cost of developing ontologies. The machine learning of ontologies (or "ontology learning") consists of extracting a knowledge representation from data sources rich in information about the domain in question. The data sources can be relational databases, tabular structures, semi-structured databases (such as HTML pages and XML documents), or unstructured databases composed of texts written in natural language.

### STATE OF THE ART

Document US2023134798A1, titled "Reasonable language model learning for text generation from a knowledge graph", discloses the generation of a rational language learning model for text data in a knowledge graph on a computing system by a processor. One or more data sources and one or more triples can be analyzed from a knowledge graph. Training data with one or more candidate labels associated with one or more of the triples can be generated. One or more language models can be trained based on the training data. It is worth emphasizing that document US2023134798A1 uses texts and knowledge graphs to generate new texts, and there is no creation of new triples.

Document US2019354544A1, titled "Machine learning-based relationship association and related discovery and search engines", refers to systems and techniques for determining relationships and significance of association between entities. The systems and techniques automatically identify the supply chain relationships between companies based on unstructured text. The system combines machine learning models to identify phrases that mention the supply chain between two companies (evidences) and an aggregation layer to take into account the evidences found and assign a confidence score to the relationship between the companies.

### SUMMARY OF THE INVENTION

The present invention discloses automated methods for obtaining a populated knowledge graph (A10) with a large number of entities and relations obtained in a reduced time frame from a corpus of interest (A5).

The invention starts from an incomplete knowledge graph (A3) that is obtained from an ontology (A1) and structured database (A2). This knowledge graph is encoded using a graph vectorization algorithm generating a vector model (A4).

In parallel, deep learning models previously trained to recognize entities (A6), link entities (A7 and A8), and extract relations (A9) are used to extract triples from the corpus (A5). Finally, the incomplete knowledge graph (A3) is populated with these triples, forming the enriched knowledge graph (A10). In addition, the URIs (Unique Resource Identifiers) of the knowledge graph (A10) are included as metadata of the sentences (A11).

To train the "deep learning" models, corpora from the domain of interest (B1) are used, wherein some of which are annotated by teams of experts (B3, B9, B11).

The method disclosed herein has at least the following advantages compared to the state of the art:
The method was developed to handle technical documents, mainly from the domains of interest of the oil, gas and energy industry;
Most of the steps can be automated;
Greater quantity and precision of entities and relations obtained;
The time required to obtain the complete graph A10 is much shorter;
The main advantage of the developed method over the state of the art is the chaining of the models A4, A7, A8: instead of trying to classify the instances to a predefined list, a specialized model is trained, which predicts a vector for each instance. That is, the entities identified in the text are positioned in the same vector space as the entities of the existing knowledge graph.

### BRIEF DESCRIPTION OF THE DRAWINGS

The present invention will now be described with reference to the typical embodiments thereof and with reference to the accompanying drawings, in which:
Figure 1 is a flowchart describing the fundamental steps of the method according to the present invention;
Figure 2 is a flowchart describing the steps for training the deep learning models used in the steps of the flowchart represented in Figure 1, according to the present invention;
Figure 3 is a block diagram illustrating the models and fundamental steps according to the present invention;
Figure 4 is a block diagram illustrating the models and steps related to the training of deep learning models according to the present invention;
Figure 5 is a representation of the method for obtaining a knowledge graph according to the state of the art;
Figure 6 is an exemplary representation of an XML file resulting from the extraction of information from technical documents according to the present invention;
Figure 7 is an exemplary representation of an annotated text in CoNLL-Ude format according to the present invention.

### DETAILED DESCRIPTION OF THE INVENTION

Specific embodiments of the present disclosure are described below. In an effort to provide a concise description of these embodiments, all features of an actual implementation may not be described in the specification. It should be appreciated that in the development of any actual implementation, as in any engineering or design project, numerous specific implementation decisions must be made to achieve the specific objectives of the developers, such as compliance with system and business-related constraints, which may vary from one implementation to another. In addition, it should be appreciated that such a development effort may be complex and time-consuming, but it would nevertheless be a routine design and manufacturing undertaking for those of common skill having the benefit of this disclosure.

Knowledge graphs have varied applications in artificial intelligence-based systems, especially for information retrieval systems.

A concrete example is the use of knowledge graphs in search filters of information retrieval systems. Currently, when trying to identify the entity "Marlim" in the text (name of an oil field), it is possible to find the terms "marlim", "Marlim", "Campo de Marlim", "MRL", "n1ar1im", "Marlim field", among other alternative spellings, typing or digitization errors. Each of these terms, although originally referring to the same concept, is treated as if it were a different oil field, making the search imprecise. By using a knowledge graph, it is possible to create a single concept for the Marlim field and associate all these terms as labels or alternative spellings of that same concept. In this way, when searching for "marlim" in the knowledge graph, the search is actually being performed for the concept Marlim, which carries with it all its variations of labels.

The knowledge graphs also allow for more elaborate inferences, allowing us to have in the graph, for example, several wells with the relation "located in" Marlim. With this, when searching for "marlim", it is possible to infer the documents that mention the wells of Marlim, even if this fact is not explicit in the text.

Finally, the knowledge graphs allow us to make connections between the concepts present in the documents and the same concepts in the relational databases. Consequently, links can be placed in the documents that mention the Marlim field to the main information from the relational database about that field (production, reserves, water injection, etc.). Or, conversely, in the various panels that compile the information from the relational databases about the Marlim field, it is possible to include links referencing the respective technical documents.

The use of knowledge graphs contributes to improving search filters in information retrieval systems, as well as serving as an interconnection between texts (unstructured information) and relational databases (structured information). However, it is very difficult and costly to create and maintain knowledge graphs manually. The present invention presents a solution to automate the population of these graphs.

The present invention proposes a new method for automatically extracting entities and relations from geoscientific technical documents to populate a specialized knowledge graph, allowing better use of the broad potential of information stored in the textual databases.

Initially, a knowledge graph is extracted from documents stored in a file database. Such documents may deal, for example, with concepts related to the geosciences and petroleum engineering. In this example, the machine learning models were trained to extract entities and relations from these areas of knowledge, such as rock types, lithostratigraphic units, geological ages, among others. However, the present invention is not limited to this domain of knowledge alone, and can be used for any subject, simply by adapting the training of the machine learning models to the corresponding domain. This will become evident to the technician skilled on the subject later on.

The present invention is addressed to written texts; however, technical documents - whether geoscientific or from other domains - contain figures, images, tables and a wide variety of layouts throughout their content. Specialized information extraction tools (for example, Apache Tika or Tornado) can receive an unstructured document as input, extract its information, reorganize the same and make this information available in files that can be consumed by other systems.

The method that is object of the present invention is capable of extracting a knowledge graph populated with new triples extracted from technical documents. This also allows enriching technical documents with metadata, which in turn makes it possible to link the entities described in said technical documents with entities and relations represented in the knowledge graph.

The method inputs are:
(A1) - An ontology with the basic concepts and relations of the domain in question;
(A2) - Lists of classes and instances from previously curated data sources. These lists can come from structured databases, taxonomies used by other systems, or other types of previously curated listings. It is worth emphasizing that the concepts present in the ontology are more general, such as "Oil Field", "Sedimentary Basins" and "Rock"; in turn, the lists present specializations or particular individuals, such as the "Marlim field", the "Amazon River mouth basin" or "carbonate rock".
(A5) - A corpus, that is, a set of technical documents composed of sentences about the domain of interest.

The outputs of the process are:
(A10) - A populated knowledge graph, that is, an ontology populated with classes, instances, and relations from the curated lists (A2), as well as extracted from the sentences in the corpus (A5).
(A11) - The sentences in the corpus (A5) enriched with metadata of the unique resource identifiers (URIs) of the classes and relations in the knowledge graph (A10).

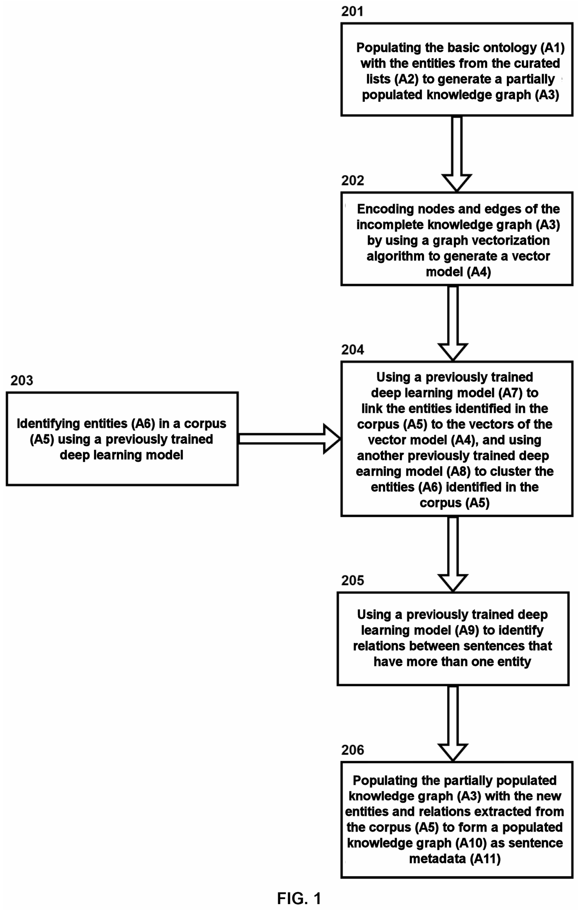

The methodology consists of the following steps 200, seen together with Figure 1:
201: Initially, the basic ontology A1 is populated with the entities from the curated lists A2 to generate a partially populated knowledge graph A3.
202: Starting from the partially populated knowledge graph A3, its nodes and edges are encoded using a graph vectorization algorithm, generating a vector model A4. Several algorithms can be used in this step, Node2Vec and RDF2Vec for example, but, in this implementation, the OWL2Vec* algorithm was used. (J. Chen, P. Hu, E. Jimenez-Ruiz, O. M. Holter, D. Antonyrajah, and I. Horrocks, "OWL2Vec*: embedding of OWL ontologies", Mach Learn, vol. 110, no. 7, p. 1813-1845, July 2021, doi: 10.1007/s10994-021-05997-6).
203: In parallel, a previously trained deep learning model A6 for recognizing entities is used to identify the entities in the corpus A5.
204: Next, a previously trained deep learning model A7 is used to link the entities identified in the corpus A5 to the vectors of the vector model A4, and another previously trained deep learning model A8 is used to cluster the entities identified in the corpus A5. The models A7 and A8 can be independent models or a single model.
205: For sentences that have more than one entity, a previously trained deep learning model A9 is used to identify whether there is a relation between the entities.
206: Finally, the partially populated knowledge graph A3 is populated with the new entities and relations extracted from the corpus A5, forming a populated knowledge graph A10. In addition, the URIs of the knowledge graph A10 are included as metadata of the sentences A11.

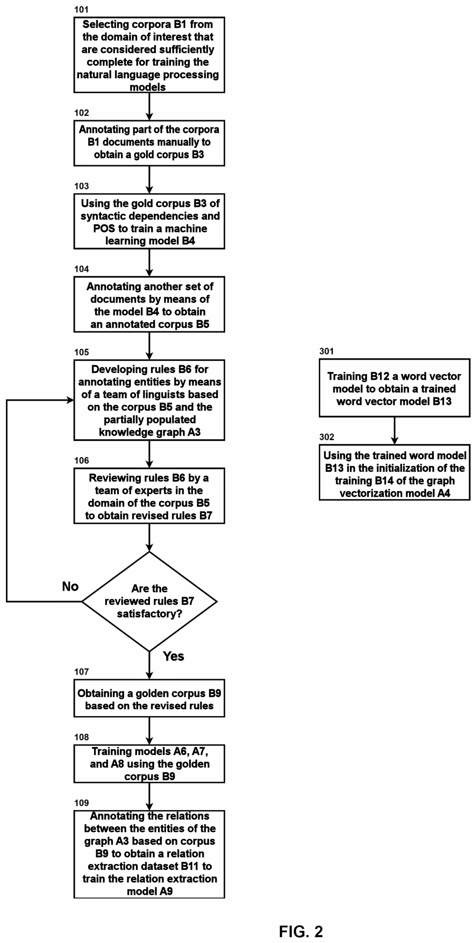

The results sought in steps 203, 204 and 205 disclosed above cannot be achieved by any currently known model. To this end, it was necessary to train the deep learning models A6, A7, A8, and A9 and the vector model A4 through a series of specialized transformations of the data and ontologies. In other words, it was also necessary to develop a methodology for training these deep learning models. This methodology includes the following steps, also illustrated in Figure 2:
101: Selecting corpora B1 from the domain of interest that are considered sufficiently complete for training the natural language processing models. For example, to validate the methodology presented herein, the inventors used corpora composed of collections of public and corporate documents related to the oil and gas industry themes. Most of the documents were written in Portuguese, using industry jargons and expressions.
102: Annotating part of the corpora B1 documents manually. A part of the documents of corpora B1 is annotated with their syntactic dependencies and POS (part-of-speech) by linguists and experts in the subjects covered by the corpora B1. This corpus annotated by linguists and experts was considered a gold corpus B3.
103: Using the gold corpus B3 of syntactic dependencies and POS to train a machine learning model B4 capable of automatically parsing POS tagging and syntactic dependencies together. (J. C. C. de Araújo, C. Freitas, M. A. C. Pacheco, and L. A. Forero-Mendoza, "An Investigation of Pre-trained Embeddings in Dependency Parsing", in Computational Processing of the Portuguese Language, P. Quaresma, R. Vieira, S. Aluisio, H. Moniz, F. Batista, and T. Gonçalves, Eds., in Lecture Notes in Computer Science, vol. 12037. Cham: Springer International Publishing, 2020, p. 281-290. doi: 10.1007/978-3-030-41505-1_27.)
104: From corpus B1, selecting a subset of documents rich in entities and relations of interest. In the case of validation, documents from the Geosciences domain were chosen. By means of the model B4, these texts are automatically annotated with their syntactic and POS dependencies and form the corpus B5.
105: Based on the previously annotated corpus B5, and the partially populated knowledge graph A3, a team of linguists develops rules B6 for annotating the entities.
106: The rules B6 for annotating the entities were reviewed by a team of experts in the corpus domain. In the case of validation, this team was composed of geoscientists. As needed, the rules are revised B7 and returned to the linguists for further development of the rules for annotating the entities.
107: Steps 105 and 106 are repeated until it is determined that the entity annotation rules reach the stage in which the rules are satisfactory (Figure 2). The stage in which the rules correctly cover all annotations is considered satisfactory, thus obtaining a golden corpus for NER ("Named Entity Recognition") B9.
108: The golden corpus for NER B9 was used to train the deep learning models for entity recognition A6, entity linking A7, and entity clustering A8. For validation, pretrained BERT models were used following the implementations proposed by the authors, wherein the last layers of the model were adapted for each specific task. (J. Devlin, M.-W. Chang, K. Lee, and K. Toutanova, "BERT: Pre-training of Deep Bidirectional Transformers for Language Understanding", in Proceedings of the 2019 Conference of the North American Chapter of the Association for Computational Linguistics: Human Language Technologies, Volume 1 (Long and Short Papers), Minneapolis, Minnesota: Association for Computational Linguistics, June 2019, pp. 4171-4186. doi: 10.18653/v1/N19-1423.)
109: With the golden corpus for NER (B9) and the partially populated knowledge graph (A3) in hand, annotations of the relations between the entities were made (B10) to obtain a relation extraction dataset (B11) to train the relation extraction model (A9). The annotations of the relations can be done manually with the help of specialists, but in the case of this validation, "distant supervision" techniques were used.

In parallel with steps 101-109 above, the following steps are also performed to support the objectives of the main steps 201-206:
301: The corpora B1 and the partially populated knowledge graph A3 are used to train the graph vector model A4. First, a word vector model is trained B12 to obtain a trained word vector model B13. An example of an algorithm to perform this training is the Word2Vec algorithm as described in Gomes et al. (2021) and Gomes (2021), obtaining a trained word vector model B13. Other word vectorization techniques can also be used, such as GloVe and fastText, among others (D. da S. M. Gomes et al., "Portuguese word embeddings for the oil and gas industry: Development and evaluation", Computers in Industry, vol. 124, p. 103347, January 2021, doi: 10.1016/j.compind.2020.103347; D. da S. M. Gomes, "PETROVEC: Desenvolvimento e avaliação de modelos vetoriais de palavras em português para o dominio de óleo e gás" ("PETROVEC: Development and evaluation of word vector models in Portuguese for the oil and gas domain"), Thesis, UFRJ, Rio de Janeiro, Brazil, 2021. [Online]. Available at: http://www.coc.ufrj.br/pt/teses-de-doutorado/636-2021/9568-diogo-da-silva-magalhaes-gomes. J. Pennington, R. Socher, and C. Manning, "GloVe: Global Vectors for Word Representation", in Proceedings of the 2014 Conference on Empirical Methods in Natural Language Processing (EMNLP), Doha, Qatar: Association for Computational Linguistics, October 2014, pp. 1532-1543. doi: 10.3115/v1/D14-1162. P. Bojanowski, E. Grave, A. Joulin, and T. Mikolov, "Enriching Word Vectors with Subword Information", Transactions of the Association for Computational Linguistics, vol. 5, pp. 135-146, December 2017, doi: 10.1162/tacl_a_00051.)
302: the trained model B13 is used in the initialization of the training B14 of the graph vectorization model A4. The graph vectorization model used in validating the invention was the OWL2Vec* algorithm (J. Chen, P. Hu, E. Jimenez-Ruiz, O. M. Holter, D. Antonyrajah, and I. Horrocks, "OWL2Vec*: embedding of OWL ontologies", Mach Learn, vol. 110, no. 7, p. 1813-1845, July 2021, doi: 10.1007/s10994-021-05997-6), but any other algorithm capable of training a graph vectorization model can be used without departing from the scope of the present invention.

Steps 301 and 302 above can be performed before, after, or at the same time as steps 101-109, since there is no interference or dependence between the same.

In summary, the deep learning models A6, A7, A8, and A9 and the vector model A4 were trained using the resources developed in steps 101-109 and 301-302. Resources can be understood as the various datasets used to train the machine learning models.

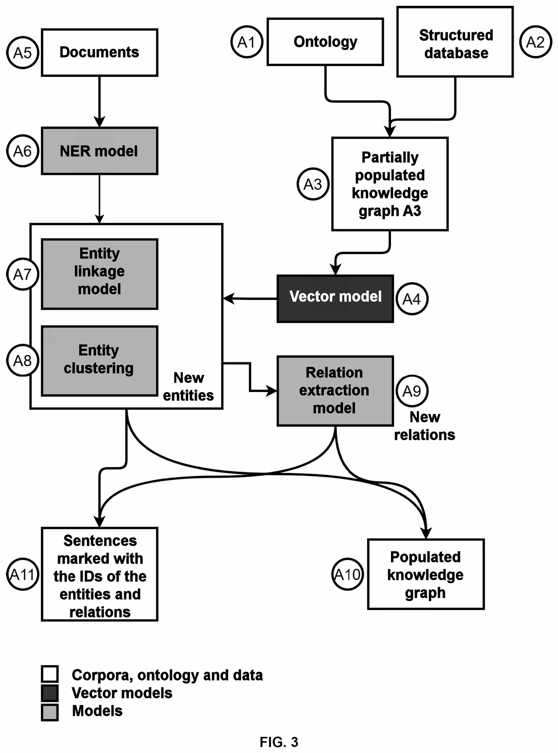

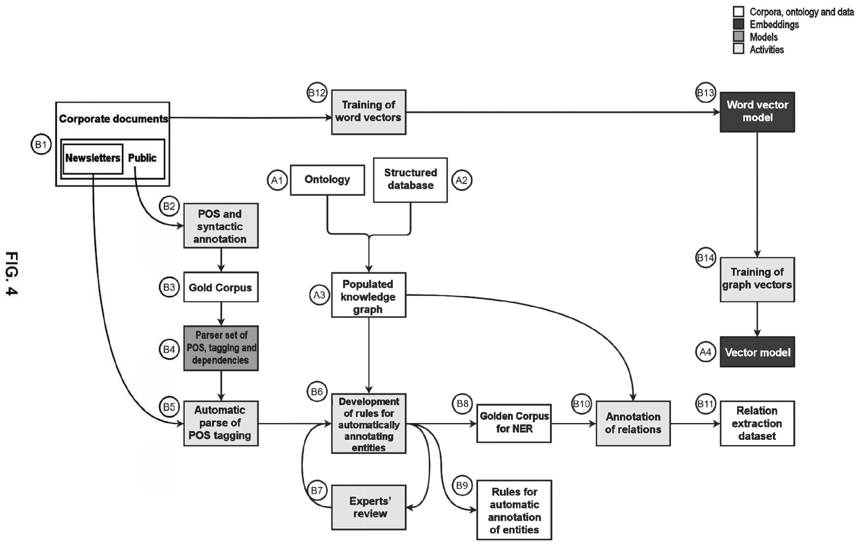

Figures 3 and 4 are block diagrams that illustrate the processes of the present invention in another way. These figures make the relation between the modules and steps described above clearer and can be viewed together with figures 1 and 2.

The present invention, as described by the steps above, allows the automated acquisition of a knowledge graph populated with a much larger and more precise number of entities relating to the analyzed corpus than the prior art. For example, suppose that the partially populated knowledge graph A3 is like the one in Table 1 below:

**Table 1**

| ***Entity*** | ***Relation*** | ***Entity*** |
|---|---|---|
| *Campos Basin* | *of_..._type* | *Basin* |
| *Baleia Azul* | *of_..._type* | *Field* |
| *1-BRSA-171-ESS* | *of_..._type* | *Well* |
| *Baleia Azul* | *located_in* | *Campos Basin* |
| *1-BRSA-171-ESS* | *located_in* | *Baleia Azul* |

The various elements of this graph are encoded during training B14 as a vector model of graph A4. Since all the information present in graph A3 was already known, the objective of this process is to extract new information from documents A5. At the end of the steps of the method described herein, the partially populated graph A3 will be supplemented with new information, and a populated knowledge graph A10 will be obtained, that is, it will be expanded with the information extracted from documents A5, as seen in Table 2. The entities and relations in bold are added automatically by the method disclosed herein in a much shorter time frame than would be possible in a completely manual process as is currently done. The invention proposed herein is capable of processing millions of documents in a few hours, which is an economically impossible task to do manually as it would require dozens of specialists working for several months. It is worth remembering that the state of the art also proposes automated methods, that is, the processing times are similar to each other. However, the advantage herein lies in the quality of the extraction, the possibility of identifying new entities, and for being specialized in a technical domain (in the case of validation, the domain of Geosciences).

**Table 2**

| ***Entity*** | ***Relation*** | ***Entity*** |
|---|---|---|
| *Campos Basin* | *of_..._type* | *Basin* |
| *Baleia Azul* | *of_..._type* | *Field* |
| *1-BRSA-171-ESS* | *of_..._type* | *Well* |
| *Baleia Azul* | *located_in* | *Campos Basin* |
| *1-BRSA-171-ESS* | *located_in* | *Baleia Azul* |
| ***Carapebus Formation*** | ***of_..._type*** | ***Lithostratigraphic Unit*** |
| ***1-BRSA-171-ESS*** | ***traverses*** | ***Carapebus Formation*** |
| ***Carapebus Formation*** | ***consists-of*** | ***Volcanic breccia*** |
| ***Carapebus Formation*** | ***is_of_..._age*** | ***Cretaceous*** |

The steps disclosed above can be implemented in any set of software and hardware capable of executing the same. What follows is an exemplary embodiment that was used by the inventors in validating the invention. Those skilled in the art will readily note that other sets of software and hardware are possible without departing from the scope of the present invention.

In its validation, the invention was implemented in a series of scripts and data formats that are transformed throughout the process. The data used in the main steps and the tools used to transform the same are presented below. The entire process of extracting entities and relations, and populating the knowledge graph - considering the data transformation scripts and the inference of the machine learning models - was done using Python scripts with Jupyter Notebook, and the orchestration of the process was done with the Apache NiFi tool.

The following are the specific resources, such as software, used in validating the methodology presented herein. These should be understood only as examples, so that other resources can be used without departing from the scope of the present invention.

### Ontology A1, Structured database A2, Partially populated knowledge graph A3

The ontology was modeled using Web Ontology Language (OWL), the standard language of the World Wide Web Consortium (W3C). To view and edit the ontology manually, the Protégé software was used. Finally, to edit and populate the ontology programmatically, Python scripts were used, mainly using SPARQL queries and the Owlready2 library.

### Word vector model B13, Graph vector model A4

The word vector model B13 was trained using the Python Gensim library. In turn, the graph vectorization was trained using the OWL2Vec* algorithm.

### Documents/Corpus A5

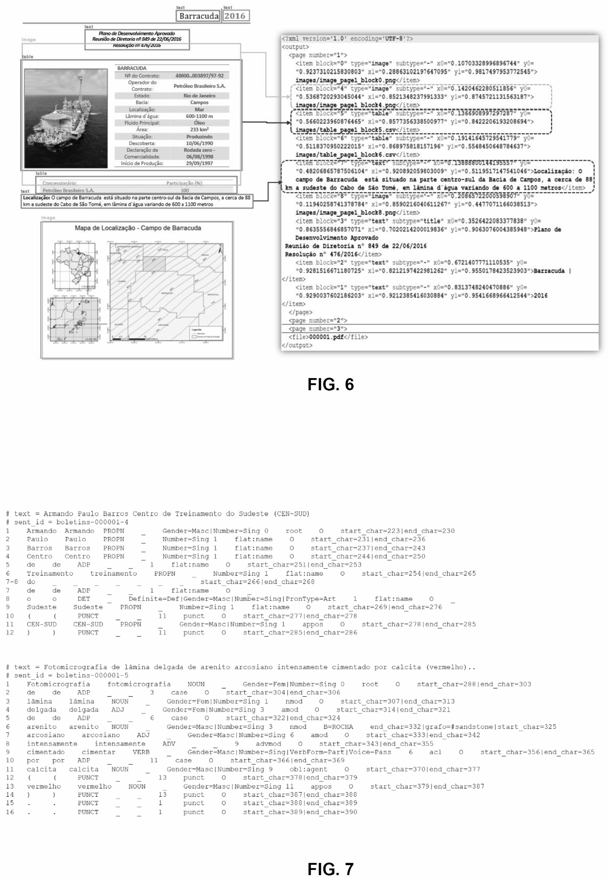

When necessary, the input documents are pre-processed by a software capable of processing unstructured documents (mainly PDF) and returning a set of structured or semi-structured files. An example of such software is described in patent application BR 10 2021 023977-8. In validating the present invention, an XML file containing the raw text extracted from the documents and tags with various types of metadata was used. At the end of the process, the URIs with the identification of the entities of the populated knowledge graph are added to this XML file as new metadata (A11). Figure 6 illustrates this process.

### Corpus Gold B3, Corpus Golden for NER B9, Dataset for extracting relations B11

The annotations of the Gold B3 and Golden for NER B11 corpora were made using the CoNLL-U format. This format was developed within the Universal Dependencies project, which develops methodologies and parsers for multiple languages. In turn, the relation extraction dataset B11 was saved in TXT format, as exemplified in Figure 7.

### NER model A6, Entity linkage model A7, Entity clustering A8, Relation extraction model A9

The machine learning models were trained using Python scripts in the Interactive Data Science (IDS) environment, but other commercial clouds such as AWS, Azure, and Google Cloud can be used without departing from the scope of the present invention. The cloud environment provides the processing and storage capacity necessary for training the models. The models were implemented using the TensorFlow deep learning framework; pre-trained models such as those available on TensorFlow Hub (https://www.tensorflow.org/hub) and Hugging Face Hub (https://huggingface.co/models) can also be used without detriment.

The advantages of the above method will be evident to a technician skilled on the subject.

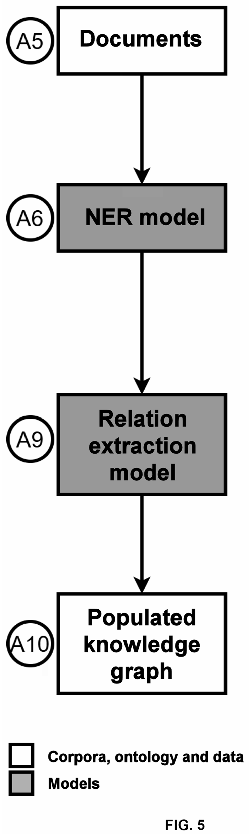

The state-of-the-art automatic population methodologies for knowledge graphs are based on simpler and different sequences of steps than those disclosed herein. In general, the known methodologies only identify the already known entities and relations in a text to create a new knowledge graph. There is no concern in the state of the art with the previously known instances of the knowledge graph, which, in the present invention, is performed by the deep learning module A7, nor with the identification of new entities, which is performed by the deep learning module A8 of the present invention. There can be said that a typical knowledge graph extraction process essentially follows the sequence seen in Figure 5; that is, a corpus A5 is analyzed and has entities A6 recognized, relations between these entities are determined, and a populated knowledge graph A10 is generated.

Some state-of-the-art methodologies propose linking entities to predefined sets of instances using classification models. This type of approach prevents the identification of instances that have not been previously listed, and also performs poorly when the number of instances is very large.

Advantageously, the present invention overcomes the above shortcomings by training and implementing the vector model A4 and the deep learning models A7 and A8: instead of trying to classify the instances to a predefined list, the present invention trains a specialized model that predicts a vector for each instance. That is, the entities A6 identified in the corpus A5 are positioned in the same vector space as the entities in the existing knowledge graph A3. If these entities overlap instances that already exist, there can be said that they are the same instance; otherwise, it means that new instances were found. To enable the creation of this vector model A4 of the knowledge graph, several steps were developed, namely: A1, A2, A3, training B12 of a vector model to obtain a trained word vector model B13, and training B14 of a vectorization model A4. These techniques are not included in the state of the art.

Next, the entities will be a little more detailed. For example, suppose that the named entities of interest are "Rock" ("*Rocha*"), "Oil Field" ("*Campo de Petróleo*") and "Sedimentary Basins" (*"Bacias Sedimentares*"). This class of entities is composed of several instances, for example:
Rock := {Bauxite, Carbonates, Granites};
Oil Field := {Marlim, Albacora, Mero};
Sedimentary Basins := {Campos Basin, Espírito Santo Basin, Solimões Basin}.
Given the following text: "The Marlim Field, located in the Campos Basin, is mainly composed of carbonates and basalts" ("O *Campo de Marlim, localizado na bacia de Campos, é formado principalmente por carbonatos e basaltos").*

The NER model (A6) will identify the class:
"The [Marlim Field](Field), located in the [Campos Basin](Basin), is mainly composed of [carbonates](Rock) and [basalts](Rock)."

In turn, the model A7 will link the terms to the instances that are already mapped (Marlim, Campos Basin and Carbonates). And the model A8 will identify new instances (basalts).

Another advantage of the present invention is the domain knowledge of the method disclosed herein. Most artificial intelligence and machine learning methodologies are based on data from a general context domain, extracted from information available on the internet. However, these methodologies cannot always be efficiently transferred to specific domains, which have much less data available for training and, in the case of natural language texts, have semantic particularities specific to the domain, such as jargons and very particular expressions. The present invention overcomes these deficiencies because it discloses a specialized training methodology, requiring only the provision of sufficiently complete corpora B1 for training the deep learning modules A7, A8, and A9 used by the present invention. The present invention enables the use of specialized documents, entities, and relations from technical documents.

An additional advantage of the present invention, as already mentioned, is the obtaining of a populated knowledge graph A10 in a much shorter time than if it were obtained by conventional methods. In addition, the quantity and precision of the entities and relations obtained by the present method are much greater and more precise than the prior art is capable of obtaining. Moreover, not only is the desired result obtained more quickly and efficiently, but the time of several specialists can be occupied with other activities, representing a very high gain in man-hours and adding very high value to the method described herein.

The present invention presents two major advantages over the state of the art: the method with the chaining of the activities and the knowledge domain of the documents.

The methodologies for automatic population of knowledge graphs currently available are based on simpler sequences of activities and different from that taught in the present invention. In general, the methodologies only identify the entities and relations in the text to create a new knowledge graph. There is no concern with instances of the knowledge graph that already exist (in the present case, activity A7), nor with the identification of new entities (activity A8). There can be said that a typical knowledge graph extraction process essentially follows the sequence in Figure 5.

Some methodologies described in the state of the art propose linking the entities to predefined sets of instances by using classification models. This type of approach prevents the identification of instances that have not been previously listed, in addition to performing poorly when the number of instances is very large. There can be seen that this is a striking advantage of the method described herein (the relation between A4, A7, A8) in relation to the state of the art: instead of trying to classify the instances to a predefined list, there is the training of a specialized model that predicts a vector for each instance. That is, the entities identified in the text are positioned in the same vector space as the entities of the existing knowledge graph. If these entities overlap instances that already exist, there can be said that they are the same instance; otherwise, it means that new instances were found. To enable the creation of this vector model of the knowledge graph (A4), it was necessary to carry out a series of activities (A1, A2, A3, B12, B13, B14) that are not described in the state-of-the-art methodologies.

The second relevant point is the domain of knowledge targeted by the method taught herein. Most artificial intelligence and machine learning methodologies are based on data from a general context domain, extracted from information available on the internet. However, these methodologies cannot always be efficiently transferred to specific domains, which have much less data available for training and, in the case of natural language texts, have semantic particularities specific to the domain, such as jargons and very particular expressions. Therefore, one of the great advantages of the method detailed herein is the use of specialized documents, entities and relations from technical documents, mainly from the oil, gas and energy industry.

Although aspects of the present disclosure may be subject to various modifications and alternative forms, specific embodiments have been shown by way of example in the drawings and have been described in detail in this document. But it should be understood that the invention is not intended to be limited to the particular forms disclosed. Instead, the invention should encompass all modifications, equivalents and alternatives that fall within the scope of the invention, as defined by the following attached claims.

## Claims

1. A method for extracting entities and relations from a corpus to populate a knowledge graph, **characterized in that** it comprises the following steps:
201: Populating a basic ontology (A1) with entities from the curated lists (A2) to generate an incomplete knowledge graph (A3);
202: Encoding the nodes and edges of the incomplete knowledge graph (A3) by using a graph vectorization algorithm to generate a vector model (A4);
203: Identifying entities in a corpus (A5) using a previously trained deep learning model (A6);
204: Using a previously trained deep learning model (A7) to link the entities identified in the corpus (A5) to the vectors of the vector model (A4), and using another previously trained deep learning model (A8) to cluster the entities identified in the corpus (A5);
205: Using a previously trained deep learning model (A9) to identify relations between sentences that have more than one entity;
206: Populating the partially populated knowledge graph (A3) with the new entities and relations extracted from the corpus (A5) to form a populated knowledge graph (A10), and including unique resource identifiers (URIs) from the populated knowledge graph (A10) as sentence metadata (A11).

2. The method according to claim 1, **characterized in that** it further comprises the following steps before step 201:
101: Selecting corpora (B1);
102: Manually annotating part of the documents from the corpora (B1) to obtain a gold corpus (B3);
103: Using the gold corpus (B3) to train the machine learning model B4;
104: Annotating another set of documents by means of the model B4 to obtain an annotated corpus B5;
105: Developing rules B6 for annotating entities by means of a team of linguists based on the corpus B5 and the partially populated knowledge graph A3;
106: Reviewing rules B6 by a team of experts in the domain of the corpus B5 to obtain revised rules B7;
107: Repeating steps 105 and 106 until it is defined that the revised rules B7 cover all annotations, and obtaining a golden corpus B9 based on the revised rules;
108: Training models A6, A7, and A8 using the golden corpus B9;
109: Annotating the relations between the entities of the graph A3 based on corpus B9 to obtain a dataset B11 to train model A9;
301: Training (B12) a word vector model to obtain a trained word vector model (B13);
302: Using the trained word model (B13) in the initialization of the training (B14) of the graph vectorization model (A4).
